(19) Europäisches Patentamt
European Patent Office
Office européen des brevets

(11) **EP 4 603 211 A2**

(12) **DEMANDE DE BREVET EUROPEEN**

(43) Date de publication:
**20.08.2025 Bulletin 2025/34**

(21) Numéro de dépôt: **25184944.4**

(22) Date de dépôt: **21.10.2022**

(51) Classification Internationale des Brevets (IPC):
**B22F 1/00** *(2022.01)*

(52) Classification Coopérative des Brevets (CPC):
**G04B 5/16; A44C 27/00; A44C 27/001; B22F 1/09; B22F 1/10; B22F 10/20; B22F 10/28; B22F 10/64; B44C 1/00; G04B 17/063; G04B 19/12; G04B 19/28; G04B 29/027; G04B 37/22; G04B 45/0007;** (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.11.2021 CH 0704862021**

(62) Numéro(s) de document de la (des) demande(s) initiale(s) en application de l'article 76 CBE:
**22805866.5 / 4 426 161**

(71) Demandeur: **Richemont International S.A.
1752 Villars-sur-Glâne (CH)**

(72) Inventeurs:
• **BICHOT, Jean-Marie
  25120 Mont-de-Vougney (FR)**
• **GIRAUD, Damien
  90100 Joncherey (FR)**

(74) Mandataire: **Novagraaf International SA
Chemin de l'Echo 3
1213 Onex, Geneva (CH)**

Remarques:
Cette demande a été déposée le 24.06.2025 comme demande divisionnaire de la demande mentionnée sous le code INID 62.

(54) **COMPOSANT HORLOGER CONTRASTE REALISE EN IMPRESSION MULTI-METALLIQUE**

(57) Procédé de fabrication d'un composant horloger ou joaillier (12, 100, 201, 1001, 2000, 3000) comprenant les étapes suivantes :
- déposer une première poudre métallique en formant un premier motif prédéterminé, et une deuxième poudre métallique, différente de la première poudre métallique, en formant un deuxième motif prédéterminé, le dépôt de la deuxième poudre métallique se faisant de manière séquentielle ou simultanée au dépôt de la première poudre métallique,
- réaliser une opération de frittage, de sorte à former le composant horloger ou joaillier (12, 100, 201, 1001, 2000, 3000) par frittage des premières et deuxièmes poudres
- réaliser une étape d'usinage et/ou de finition du composant horloger ou joaillier (12, 100, 201, 1001, 2000, 3000) pour dévoiler un motif ornemental comprenant au moins une partie du premier motif et/ou du deuxième motif.

Fig. 1

(52) Classification Coopérative des Brevets (CPC):
(Cont.)**G04B 45/0015;** A44C 15/004; B22F 3/1021;
B22F 10/12; B22F 10/14; B22F 10/16; B33Y 80/00;
B44C 3/005

**Description**

La présente invention concerne de manière générale le domaine de l'horlogerie et de la joaillerie, plus particulièrement le domaine de la fabrication de composants horlogers, comme par exemple les masses oscillantes, les balanciers, les composants de mouvements, ou encore les composants de boîtes de montre, par exemple les carrures.

On connaît les procédés de fabrication de composants, en particulier pour le marquage des composants afin de rendre visible un logo, une référence, ou d'une manière générale une inscription ou tout texte sur le composant.

Par exemple, le procédé de fabrication conventionnel d'un pont est le suivant. Les étapes sont l'usinage du pont, à partir d'une ébauche en matière métallique par exemple en laiton, gravage des textes et/ou références, dorage des textes et/ou références, dépose d'épargne dans les gravures, terminaison/décoration, rhodiage et retrait de l'épargne dans les gravures.

Le procédé de l'art antérieur présente l'inconvénient d'un grand nombre d'étapes successives, qui sont en outre coûteuses et fastidieuses.

La présente invention a pour but de proposer une nouvelle construction de composants horlogers, offrant de nouvelles possibilités mécaniques et/ou esthétiques, tout en facilitant la fabrication et en particulier en permettant une fabrication à la demande.

L'invention concerne, dans un premier aspect, un procédé de fabrication d'un composant horloger ou joaillier comprenant les étapes suivantes :

- déposer, une première poudre métallique en formant un premier motif prédéterminé, et une deuxième poudre métallique, différente de la première poudre métallique, en formant un deuxième motif prédéterminé, le dépôt de la deuxième poudre métallique se faisant de manière séquentielle ou simultanée au dépôt de la première poudre métallique,
- réaliser une opération de frittage et/ou de fusion, de sorte à fritter les premières et deuxièmes poudres.

On entend par opération de frittage une fusion au moins localisée des grains de poudre qui coalescent. En d'autres termes, on entend par coalescence une réunion ou fusion d'éléments qui sont en contact.

Ceci permet de former ou fabriquer un composant horloger ou joaillier avec une grande qualité tout en réduisant les étapes et les coûts de fabrication.

Avantageusement, cela permet d'éviter tout ou partie des étapes d'épargne et de dépôt galvanique ou ionique.

En d'autres termes, le procédé de fabrication consiste à :

- réaliser une ébauche, en particulier en laiton, en maillechort ou en acier, avec une zone interne, en particulier en or, par impression 3D multi-métallique
- fritter au laser et/ou délianter et fritter au four,
- éventuellement usiner les zones fonctionnelles,
- éventuellement réaliser une étape de terminaison décoration,
- éventuellement rhodier,
- éventuellement graver les textes et/ou références au niveau de la zone interne.

Par exemple, deux calibres de montre peuvent avoir une base commune à laquelle il est possible d'ajouter des complications ou modules différents. Les deux calibres auront alors des numéros de calibre différents mais ces numéros peuvent être gravés sur une pièce commune aux deux calibres (un pont par exemple). L'intérêt du procédé de la présente invention est donc notamment de pouvoir différentier les pièces à la toute dernière étape de gravage. Il est possible d'appliquer ce procédé à tout composant horloger ou joaillier, en particulier une carrure, une lunette, un fond, dont les gravures feraient ressortir une autre matière ou couleur.

Avantageusement, le procédé comprend en outre l'étape consistant à

- réaliser une étape d'usinage et/ou de finition pour obtenir le composant horloger ou joaillier comprenant un motif ornemental formé d'au moins une partie du premier motif et/ou d'au moins une partie du deuxième motif.

Ceci permet de fabriquer le composant horloger ou joaillier avec une grande qualité de finition ou d'apparence, tout en éliminant toute bavure ou aspérité indésirable.

Avantageusement, la première poudre métallique et la deuxième poudre métallique sont frittées simultanément.

Avantageusement, la première poudre métallique et la deuxième poudre métallique sont frittées de manière séquentielle.

Les différences de point de fusion peuvent faire que le frittage de la première poudre a lieu ou se finisse avant que le frittage de la deuxième poudre commence.

Ceci permet de lier les deux poudres entre elles et d'adapter la fabrication au motif ornemental souhaité.

Avantageusement, la première poudre métallique et/ou la deuxième poudre métallique sont frittées en phase liquide, au moins localement.

Avantageusement, la première poudre métallique et/ou la deuxième poudre métallique sont frittées en phase liquide localisée.

Avantageusement, au moins une de la première poudre métallique ou de la deuxième poudre métallique es frittée en phase liquide localisée.

Ceci permet de réaliser le frittage lorsque au moins l'une de la première poudre ou de la deuxième poudre passe par une phase liquide lors du frittage. Il est fait référence notamment au cas dans lequel la première poudre comprend de l'or et la deuxième poudre comprend du platine.

Avantageusement, le premier motif ou deuxième motif est un logo et/ou un texte.

Avantageusement, le motif ornemental est un logo et/ou un texte.

Avantageusement, le premier motif présente une contre forme du deuxième motif.

Avantageusement, la première poudre métallique présente une couleur différente de la deuxième poudre métallique.

Ceci permet de fabriquer un composant horloger avec un logo ou un texte directement intégré à lui, en facilitant la fabrication et en améliorant la qualité. Ceci permet en outre d'améliorer l'aspect, la lisibilité et/ou le contraste des inscriptions et/ou dessins.

Avantageusement, la première poudre métallique comprend du bronze et la deuxième poudre comprend du titane, ou dans lequel la première poudre métallique comprend de l'or gris et la deuxième poudre comprend de l'or rouge.

Ceci permet d'obtenir un contraste adéquat et une esthétique améliorée, tout en conservant des qualités mécaniques appropriées au composant horloger ou joaillier.

Avantageusement, l'étape d'usinage et/ou de finition consiste à enlever un masque formé par la première poudre métallique et/ou la deuxième poudre métallique.

Avantageusement, l'étape d'usinage et/ou de finition consiste à enlever un masque formé par la première poudre métallique.

Avantageusement, l'étape d'usinage et/ou de finition consiste à réaliser une attaque chimique sur la première poudre métallique frittée et/ou sur la deuxième poudre métallique frittée. Ainsi, cela permet de révéler le motif ornemental en particulier dans le cas de poudres ayant des résistances à l'oxydation différentes.

Avantageusement, l'étape d'usinage et/ou de finition consiste à enlever un masque formé par la deuxième poudre métallique.

Avantageusement, l'étape d'usinage et/ou de finition comprend une étape de tribofinition.

Avantageusement, l'étape de dépose consiste à déposer la première poudre métallique et/ou la deuxième poudre métallique dans, sur ou au sein d'un outillage de frittage également appelé matrice. Avantageusement, l'outillage de frittage comprend un support ou un moule de frittage. De préférence, l'outillage de frittage comprend en outre un élément électrique agencé pour fournir un courant à la première poudre métallique et/ou à la deuxième poudre métallique. Avantageusement, le frittage est réalisé à l'aide d'un frittage flash, ou « spark plasma sintering (SPS) » en anglais. Il est possible également de réaliser un pressage à chaud.

Avantageusement, l'étape de dépose consiste à déposer la première poudre métallique et/ou la deuxième poudre métallique à l'aide d'un outillage de frittage. Avantageusement, l'outillage de frittage est une machine d'impression 3D multi-métallique. De préférence, la machine d'impression 3D multi-métallique est agencée pour permettre une impression directe par dépôt de poudre métallique et apport de chaleur. L'apport de chaleur peut être réalisé par laser ou par tout autre moyen. Avantageusement, la machine d'impression 3D met en œuvre une fabrication par stéréolithographie ou par jet de liant sur une poudre métallique (metal binder jetting en anglais).

Ceci permet de proposer un procédé de fabrication simple et efficace, de sorte à réduire les coûts tout en améliorant la qualité de réalisation.

Avantageusement, le procédé comprend en outre l'étape préliminaire :

- mélanger la première poudre et/ou la deuxième poudre avec un liant.

Avantageusement, le procédé comprend en outre l'étape préliminaire :

- mélanger la première poudre avec un premier liant.

Avantageusement, le procédé comprend en outre l'étape préliminaire :

- mélanger la deuxième poudre avec un deuxième liant.

Avantageusement, le procédé comprend en outre l'étape suivante :

- enlever un liant du composant horloger ou joaillier.

Ceci permet de prévoir un liant avec la poudre métallique de sorte à faciliter, pour certaines applications, la fabrication.

Avantageusement, le procédé comprend les étapes suivantes:

- former au moins une couche interne par une opération de frittage de la deuxième poudre métallique, et
- former au moins une couche externe, recouvrant la couche interne, par une opération de frittage de la première poudre métallique, et
- dévoiler au moins une partie de la couche interne par une opération de finition telle qu'un enlèvement localisé de matière de la couche externe.

On entend par dévoiler le fait de mettre à jour un motif ornemental en ôtant le voile de matière qui le recouvrait, c'est-à-dire mettre à jour un motif ornemental en le faisant apparaître, en le révélant, en enlevant un masque. Le masque est ce qui le masquait ou le recouvrait. Le motif peut être affleurant et/ou gravé.

Avantageusement, la couche interne est formée dans une zone prédéterminée du composant horloger ou joaillier.

Ceci permet de proposer un composant horloger facile à réaliser, réduisant les coûts, améliorant la qualité et l'esthétisme, en particulier le contraste. Ceci permet de proposer un procédé de fabrication à la demande, ce qui est très flexible, réduit les coûts de stockage, de maintenance, de packaging et de transport, tout en diminuant les délais, notamment.

On entend par poudre frittée une poudre ayant subi un frittage en tant que procédé de fabrication consistant à chauffer la poudre, avec ou sans fusion totale de la poudre. Sous l'effet de la chaleur, les grains de la poudre coalescent entre eux, au moins localement, ce qui assure la cohésion et la tenue générale du composant obtenu par frittage. Le chauffage peut être réalisé grâce à un laser, par micro-ondes, par plasma, par induction ou tout autre moyen. La ou les poudres peuvent être au préalable agglomérées ou préformées. La ou les poudres peuvent être mises sous pression avant ou après le chauffage. Le frittage peut également faire intervenir un liant, c'est-à-dire que les grains de la poudre sont liés entre eux par un liant avant l'étape de chauffage. Dans ce cas, il peut être nécessaire de procéder à une étape de déliantage. On entend généralement par déliantage l'élimination, par un traitement thermique ou par l'action d'un solvant, du liant présent dans une pièce préalablement obtenue par mise en forme d'un mélange de poudre métallique (ou céramique) et de liant polymère. Il peut s'agir d'une étape intermédiaire dans laquelle le liant est enlevé du composant, par exemple en brulant le liant, en le faisant fondre ou par action chimique. Avantageusement, le déliantage est réalisé par attaque chimique, ou par dégradation et/ou évaporation (brulage).

Avantageusement, l'opération de frittage comprend une opération de fusion.

Ceci permet de réaliser une fusion, de préférence sensiblement complète, de la première poudre avec la deuxième poudre.

Avantageusement, le procédé comprend en outre l'étape suivante :

- déposer, une troisième poudre métallique en formant un troisième motif prédéterminé.

Avantageusement, le procédé comprend en outre l'étape suivante :

- réaliser une opération de frittage de sorte à fritter la troisième poudre.

Avantageusement, le procédé comprend en outre l'étape suivante :

- déposer, une quatrième poudre métallique en formant un quatrième motif prédéterminé.

Avantageusement, le procédé comprend en outre l'étape suivante :

- réaliser une opération de frittage de sorte à fritter la quatrième poudre.

Ceci permet de fabriquer le composant horloger ou joaillier à l'aide de plus de deux poudres, comme par exemple trois poudres, quatre poudres ou plus, de préférence différentes.

Avantageusement, le dépôt de la première poudre métallique et/ou de la deuxième poudre métallique est commandé par une unité de commande.

Avantageusement, le dépôt de la première poudre métallique et/ou de la deuxième poudre métallique est réalisé par un robot, de préférence un bras robotisé.

Avantageusement, le dépôt de la première poudre métallique et/ou de la deuxième poudre métallique est surveillé par une unité de surveillance, par exemple une caméra.

Avantageusement, l'unité de commande est commandée en fonction d'un écart observé par l'unité de surveillance.

Avantageusement, l'unité de commande et/ou l'unité de surveillance sont reliés à un ordinateur.

Ceci permet de contrôler et commander la réalisation du premier motif prédéterminé et/ou du deuxième motif prédéterminé, et/du motif ornemental.

Dans un deuxième aspect, l'invention concerne un composant horloger monolithique comprenant :

- une première portion formée d'une première poudre métallique frittée de couleur CIE LAB L1*a1*b1*,
- une deuxième portion formée d'une deuxième poudre métallique frittée de couleur CIE LAB L2*a2*b2*, formant un motif graphique en contraste avec la première poudre métallique frittée,

dans lequel la deuxième poudre métallique frittée a une couleur différente de la première poudre métallique frittée telle que

$$\Delta E_{ab}^{*} = \sqrt{(L_2^* - L_1^*)^2 + (a_2^* - a_1^*)^2 + (b_2^* - b_1^*)^2}$$

ΔE*ab > 3 de préférence ΔE*ab > 6 avec                                                                                                    .

En outre, pour définir la couleur, il est possible de faire référence à la norme sur les alliages d'or (norme ISO8654) avec les coordonnées L*a*b*.

La différence ou distance entre deux couleurs est une quantité mesurable, un métrique en d'autres termes. Ceci permet de quantifier objectivement cette différence ou distance. Les définitions conventionnelles font appel par exemple à la distance euclidienne dans un espace de couleur. Par exemple et par analogie, pour un espace RVB : Rouge Vert Bleu ou RGB : Red, Green, Blue en anglais, il est possible de définir la distance comme la racine carré de la somme des carrés des différences pour chaque couleur. C'est-à-dire que la distance delta est égale à la racine carrée de la somme de : premièrement la différence entre le deuxième rouge et le premier rouge, la différence étant mise au carré ; deuxièmement la différence entre le deuxième vert et le premier vert, la différence étant mise au carré ; troisièmement la différence entre le deuxième bleu et le premier bleu, la différence étant mise au carré. Chaque valeur pour le rouge, vert, bleu étant prise comme une coordonnée dans l'espace de couleur.

Il est en outre fait référence à la Commission Internationale sur l'Illumination (CIE) et ses publications, notamment pour le CIE1931, le CIE76, le CIE94, le CIEDE2000 et le CMC I :c. De préférence, comme indiqué ci-avant, il est fait usage du CIE76.

Ceci permet de proposer un composant horloger ou joaillier avec une grande qualité tout en réduisant les étapes et les coûts de fabrication.

On entend par composant monolithique un composant d'une seule pièce, d'un seul bloc, massif. On entend ici par composant monolithique un composant pour lequel l'assemblage mécanique du composant lui-même n'est pas réalisé par vissage, rivetage, pointage ou chassage par exemple. En d'autres termes, il n'y a pas de vis, de rivet ou de pion pour assembler la première portion à la deuxième portion ; et la première portion n'est pas chassée avec la deuxième portion ou vice-versa.

Avantageusement, le motif graphique est dévoilé par enlèvement de matière de la première portion.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :

- la figure 1 représente une masse oscillante selon un premier mode de réalisation d'un composant horloger, vue en perspective,

- la figure 2 représente la masse oscillante selon une vue en perspective du côté opposé à celui de la figure précédente,

- la figure 3 représente un système oscillant comprenant un spiral et un balancier selon un deuxième mode de réalisation du composant horloger, vu en perspective,

- la figure 4 représente une carrure selon un troisième mode de réalisation,

- la figure 5 représente un mouvement de montre avec la masse oscillante, le balancier et un pont selon un quatrième mode de réalisation,

- la figure 6 représente le pont en vue en perspective,

- la figure 7 représente un cadran selon un cinquième mode de réalisation, vu en perspective,

- la figure 8 représente le cadran vu en perspective, du côté opposé à celui de la figure précédente,

- la figure 9 représente une lunette selon un sixième mode de réalisation, vue en perspective,

- la figure 10 représente la lunette vue en perspective, du côté opposé à celui de la figure précédente,

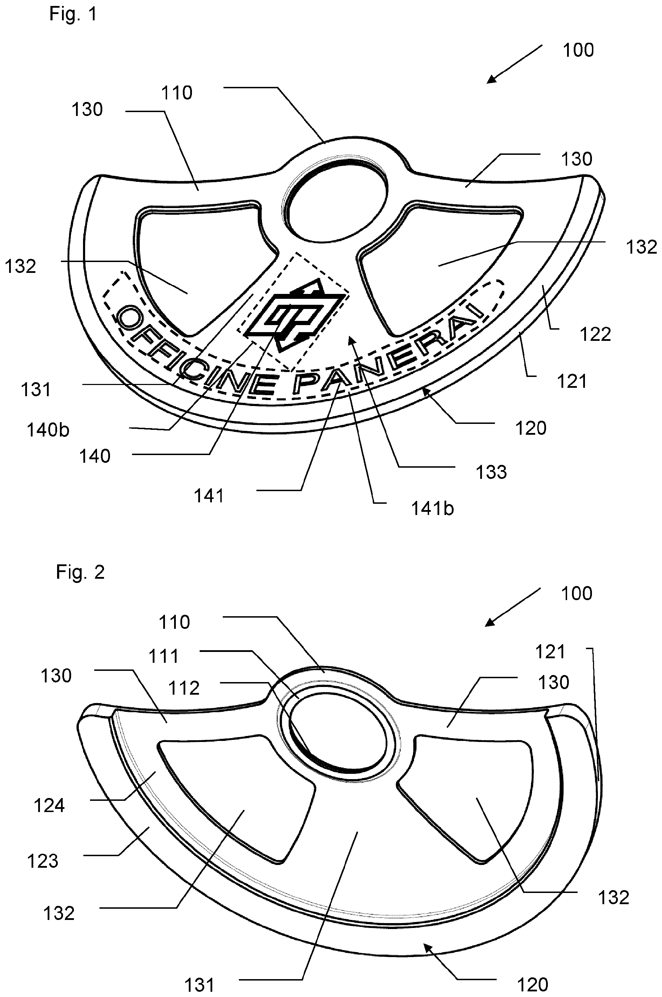

La figure 1 représente une masse oscillante 100 selon un premier mode de réalisation d'un composant horloger, vue en perspective.

La masse oscillante 100, comprend un moyeu 110 agencé pour remonter un ressort par l'intermédiaire d'une roue d'un système à remontoir automatique. Le composant horloger est ici la masse oscillante 100. De préférence, le composant horloger est monolithique.

La masse oscillante 100 comprend en outre une partie support constituée par exemple d'une portion principale qui peut être une branche centrale (ou bras, ou bras central) 131 et deux branches auxiliaires (ou bras auxiliaires) 130, optionnelles, reliant le moyeu 110 à un segment 120 (ou portion de segment 120) de la masse oscillante 100. Les branches auxiliaires 130 sont séparées de la branche centrale 131 par des évidements 132, de part et d'autre de la branche centrale 131. Il est fait référence à la branche centrale 131 par opposition aux branches auxiliaires 130.

D'une manière générale, les termes « premier » et « deuxième » ci-avant ou ci-après, y compris toutes leurs déclinaisons, sont donnés pour faciliter la compréhension, et peuvent être adaptés si nécessaire.

La branche centrale 131 comprend un logo 140 réalisé comme suit. Les étapes de fabrication consistent à déposer une poudre principale métallique (ou première poudre métallique) formant un premier motif prédéterminé, à déposer une poudre secondaire métallique (ou deuxième poudre métallique), différente de la poudre principale métallique, en formant un deuxième motif prédéterminé. Le dépôt de la poudre secondaire métallique se fait de manière séquentielle ou simultanée au dépôt de la poudre principale métallique. Il convient ensuite de réaliser une opération de frittage. Il est possible ensuite de réaliser une étape d'usinage et/ou de finition de la masse oscillante 100 pour dévoiler ou révéler un motif ornemental comprenant au moins une partie du premier motif et/ou du deuxième motif.

En d'autres termes, il est possible de déposer par exemple au niveau de la branche centrale 131 la poudre principale métallique, de préférence du cuivre, alliage de cuivre ou laiton, titane ou alliage de titane, de l'aluminium ou alliage d'aluminium. La poudre principale métallique forme un motif semblable à la forme de la branche centrale 131. Ensuite, il est possible de déposer la poudre secondaire métallique au niveau du logo 140, en formant le deuxième motif prédéterminé, qui peut être par exemple une zone principale prédéterminée 140b, telle qu'un rectangle, typiquement plus grand que le logo 140 en vue en plan (par exemple 10 % plus grand, 20 % plus grand en comparaison aux dimensions maximales du logo 140) et d'une épaisseur inférieure à l'épaisseur de la branche centrale 131 finie (par exemple 10%, 20 %, 30%, 40 %, 50%, sans y être limité). La poudre secondaire métallique peut-être en or, alliage d'or, en platine ou alliage de platine, en tungstène ou alliage de tungstène. Il est possible de choisir la poudre principale métallique et la poudre secondaire métallique afin d'augmenter le contraste visuel du logo 140, par exemple avec des matériaux ayant une couleur différente ou un aspect visuel différent. Il convient de réaliser une opération de frittage, c'est-à-dire de fritter les poudres métalliques déposées. Notons qu'il est possible de fritter à la volée, c'est-à-dire de déposer des couches de poudre (principale et/ou secondaire) et de fritter ces couches de poudre par étage, une fois que les couches de poudre ont atteint une épaisseur prédéterminée. Il est possible de fritter la poudre métallique principale en même temps que la poudre métallique secondaire, ou bien de fritter les poudres métalliques séparément. Il est possible de continuer le dépôt de la poudre principale métallique afin recouvrir la poudre secondaire métallique (frittée ou pas encore frittée), jusqu'à obtenir l'épaisseur d'ébauche du composant horloger voulu, ici la masse oscillante 100. Ensuite, il est possible de réaliser une étape d'usinage et/ou de finition pour dévoiler ou révéler le motif ornemental comprenant au moins une partie du premier motif et/ou du deuxième motif. Ainsi, il est possible d'usiner une partie de la branche centrale 131 au niveau du logo 140 afin de révéler le logo 140. L'enlèvement de matière, réalisé par exemple par usinage ou par tout autre moyen adapté, révèle la couche de matière sous-jacente, formée de la poudre secondaire frittée. Ceci permet de faciliter la fabrication du logo 140 et réduire les coûts de fabrication.

Il est possible de fabriquer la masse oscillante 100 avec une matière principale similaire pour le bras 131 et le segment 120. Dans ce cas, une inscription ou texte 141 au niveau du segment 120 est réalisée avec les mêmes matériaux que pour le logo 140 et le bras 131.

Alternativement, il est possible de prévoir une matière principale différente pour le bras 131 et le segment 120, notamment pour des raisons mécaniques, et d'optimisation du fonctionnement de la masse oscillante 100, afin notamment de modifier son inertie et de créer un balourd. Dans ce cas, l'inscription ou le texte 141 et le segment 120 sont réalisés comme suit et adaptés de ce qui précède.

Le segment 120 peut comprendre l'inscription 141, comme indiqué ci-avant. L'inscription 141 peut être par exemple une référence, une mention légale ou la marque de la montre comme représenté à la figure 1. L'inscription 141 peut être réalisée par dépôt de poudre et frittage comme indiqué précédemment, avec des variantes de matières comme discuté. De préférence, le segment 120 est principalement réalisée en or ou alliage d'or, en platine ou alliage de platine, en tungstène ou alliage de tungstène. Il est possible de déposer la poudre principale métallique afin de former le segment 120 et de déposer la poudre métallique secondaire afin de former l'inscription 141. La première poudre est ici la poudre principale, c'est-à-dire servant de la fonction mécanique de la masse oscillante 100, et la deuxième poudre métallique sert à l'inscription 141 proprement dite. La poudre principale métallique est donc ici en or ou alliage d'or, en platine ou alliage de platine, en tungstène ou alliage de tungstène. La poudre secondaire métallique est ici une poudre métallique différente de la première poudre métallique. Il est possible de choisir dans la même liste que la poudre principale, mais en faisant des croisements. Par exemple, il est possible de choisir la poudre principale en or 24 carats et la poudre secondaire en or rose ou or blanc par exemple. Il est possible de prévoir le dépôt de la poudre secondaire sur une zone secondaire 141b telle qu'un arc de cercle plus grand que l'inscription 141 (par exemple 10%, 20%, 30%, sans y être limité). Il est en outre possible de prévoir la zone secondaire 141b au plus près de l'inscription 141, comme par exemple une pluralité de zones secondaires enveloppant chaque caractère de l'inscription 141. Comme discuté ci-avant, il est possible de fritter les poudres simultanément ou non, de déposer simultanément ou en séquence.

En d'autres termes, la poudre principale métallique frittée forme une couche externe et la poudre secondaire métallique frittée forme une couche interne, sous-jacente, c'est-à-dire recouverte par la couche externe. Le logo 140 et l'inscription 141 sont révélés par une opération de finition tel qu'un enlèvement de matière de la couche externe.

De plus, la masse oscillante 100 peut comprendre une surface plane principale 133, et le logo 140 et l'inscription 141 peuvent être réalisés sur toute partie de la masse oscillante 100, en particulier sur toute partie de la surface plane principale 133.

Enfin, le segment 120 comprend un chanfrein 122 entre la surface plane principale 133 et une face latérale 121 de la masse oscillante 100. L'inscription 141 et le logo 140 peuvent également être prévu au niveau du chanfrein 122 ou à tout autre endroit de la masse oscillante 100.

La figure 2 représente la masse oscillante 100 selon une vue en perspective du côté opposé à celui de la figure 1.

Les numéros de référence sont repris autant que nécessaire pour les parties communes, et d'une manière générale, sur toutes les figures.

Le moyeu 110 comprend une piste 111 et une portion de centrage 112 afin de coopérer avec le système de remontoir automatique, en particulier avec un roulement à bille doté d'une couronne dentée, permettant le montage de la masse oscillante 100 sur le mouvement et la transmission des mouvements de la masse oscillante 100 aux rouages du système de remontoir automatique.

Le segment 120 comprend une protrusion 123 et un renfoncement 124, en retrait de la protrusion 123.

De préférence, la protrusion 123 est une portion distale de la masse oscillante 100.

Ainsi, une première portion de la masse oscillante 100 est le segment 120 (ou portion de segment) et une deuxième portion est le bras central 131 agencé entre le moyeu 110 et le segment 120.

De préférence, comme indiqué précédemment, les matériaux principaux du segment 120 et du bras 131 sont différents. Ici, le segment 120 est principalement réalisée en or ou alliage d'or, en platine ou alliage de platine, en tungstène ou alliage de tungstène, et le bras central 131 est principalement réalisé en cuivre, alliage de cuivre ou laiton, titane ou alliage de titane, en aluminium ou alliage d'aluminium.

Les bras auxiliaires 130 sont de préférence réalisés dans la même matière que le bras central 131, mais peuvent aussi être réalisés dans une autre matière.

Le segment 120 est ainsi formé principalement d'une poudre métallique frittée et le bras central 131 est principalement formé d'une autre poudre métallique frittée. Les bras auxiliaires 130 sont de préférence formés de la même poudre frittée que le bras central 131. Les matières des poudres sont de préférence sélectionnées parmi les matières énoncées ci-avant, sans y être limitées pour autant.

Le moyeu 110 peut être réalisé en toute matière, c'est-à-dire de préférence dans la même matière que le bras central 131, avec la même poudre frittée. Alternativement, le moyeu 110 peut être réalisé dans une autre matière, comme par exemple celle du segment 120.

Selon un mode de réalisation préféré, le segment est principalement en or 18 carats ou plus, et le bras central 131 est principalement en alliage de cuivre, par exemple laiton.

Il est possible de former le composant horloger (ici la masse oscillante 100, mais cela s'applique à tous les composants horlogers, notamment ceux mentionnés ci-avant et ci-après) par frittage de poudre, avec ou sans l'utilisation d'un liant, notamment un liant polymère.

De manière conventionnelle, il est possible de mélanger, avant frittage, la poudre métallique et des granulés plastiques. Il est fait référence par exemple aux thermoplastiques (par exemple polyéthylène, polypropylène), aux fluidifiants (par exemple paraffine, polyéthylène glycol) ou des mouillants (par exemple acide stéarique). Ce mélange, également appelé « feedstock » peut être extrudé dans une presse à injection, afin d'obtenir un composant dit « vert ». Le composant dit « vert » subit alors le déliantage, par exemple par action chimique ou thermique, afin d'obtenir un composant dit « marron ». La pièce « marron » est ensuite frittée, c'est-à-dire chauffée, généralement jusqu'à une valeur proche du point de fusion, de sorte à obtenir une pièce dite « grise », ou pièce finale. La pièce finale peut toutefois subir une ultime étape de finition, comme par exemple un polissage, un traitement de surface ou une gravure. Il est fait référence aussi au moulage par injection de poudre ou de poudre métallique (powder injection molding en anglais ou metal injection molding abrévié MIM).

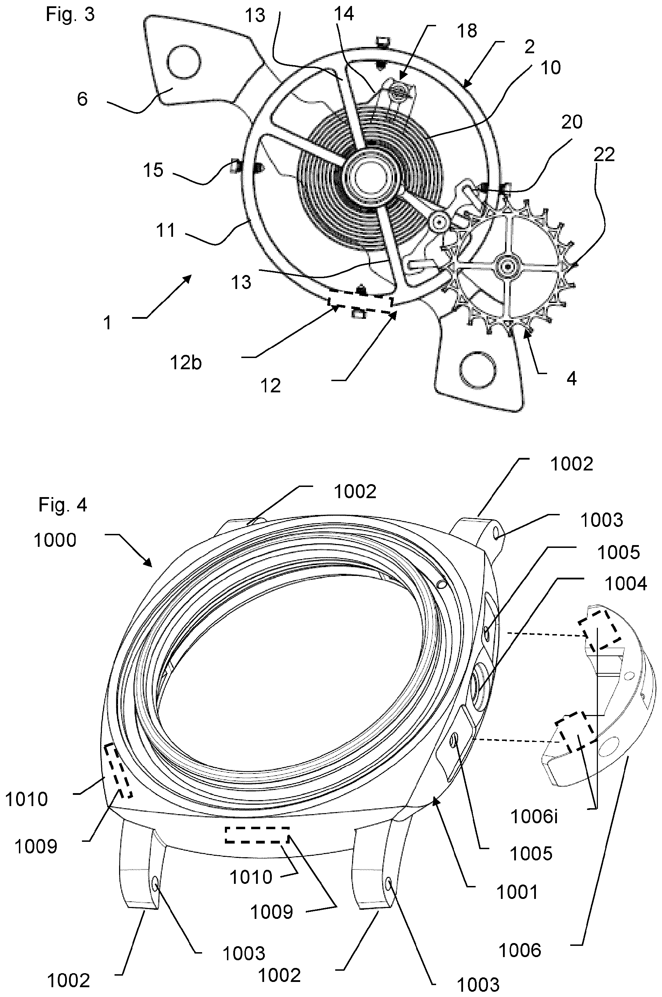

La figure 3 représente un système oscillant comprenant un spiral 10 et un balancier 12 selon un deuxième mode de réalisation du composant horloger, vu en perspective.

Dans le deuxième mode de réalisation, le composant horloger est le balancier 12, comme illustrée en figure 3. De préférence, le composant horloger est monolithique.

Le système oscillant 1, également appelé résonateur, comprend un système balancier-spiral 2 avec le balancier 12 couplé au spiral 10, associé à un échappement 4.

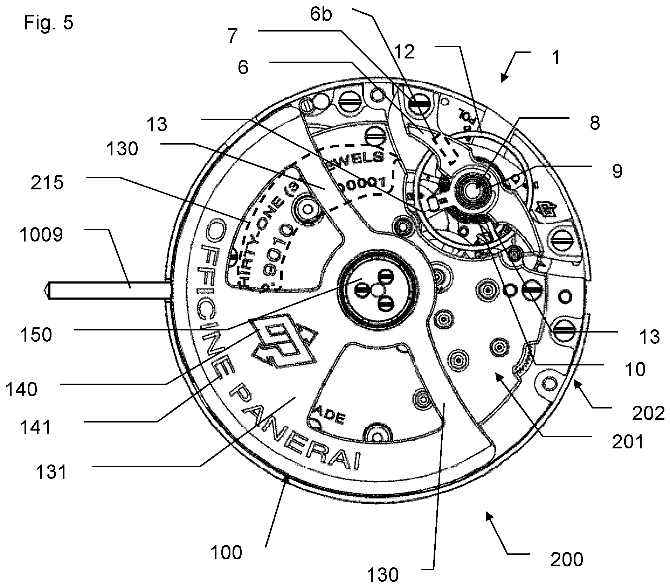

Le système balancier-spiral 2 est monté sur un pont de balancier 6, destiné à être lui-même assemblé à la platine du mouvement horloger. L'ensemble de la platine et des ponts du mouvement horloger constitue le bâti du mouvement, comme illustré à la figure 5.

L'extrémité interne du ressort spiral 10 est ici solidaire du balancier 12 tandis que son extrémité externe 14 est fixée à un piton porté par un porte-piton 18, destiné à être rendu solidaire du bâti.

Les oscillations du balancier 12 permettent d'actionner une ancre 20, cette dernière coopérant avec la denture d'une roue d'échappement 22 d'un mobile d'échappement, de manière conventionnelle.

La balancier 12 comprend une serge 11 et au moins un bras 13. La serge 11 comprend une poudre principale métallique recouvrant une poudre métallique secondaire. Le premier motif est alors sensiblement le motif de la serge 11 et le deuxième motif est par exemple une portion d'arc de cercle de la serge 11. Il est possible de régler l'inertie du balancier 12 par enlèvement de matière tout en révélant un motif ornemental en rendant visible la couche sous-jacente de la poudre secondaire métallique frittée. Le motif ornemental peut être par exemple des arabesques ou des pointillés plus ou moins espacés. Le bras 13 peut être réalisé avec la poudre principale métallique frittée ou avec la poudre secondaire métallique frittée.

Il est possible de prévoir une ou plusieurs zones prédéterminées 12b dans laquelle la poudre secondaire métallique est présente en couche interne (ou présente en plus grande quantité) et de révéler la couche interne par enlèvement de matière de la couche externe. Cet enlèvement de matière peut être fait en coopération avec le réglage mis en œuvre avec des vis de réglage 15 (ou poids ou pions).

Dans un autre mode de réalisation, une première portion du composant horloger est la serge de balancier ou serge 11 et une deuxième portion est l'au moins un bras 13 (ici deux bras 13). La serge 11 peut être équipée de vis 15 (ou de poids ou de pions) afin de régler son inertie, de régler l'équilibrage du balancier 12 ou la régularité du système balancier-spiral 2.

La serge 11 est réalisée en or ou alliage d'or, et les bras 13 sont réalisés en cuivre, alliage de cuivre, ou laiton. La serge 11 est formée d'une première poudre métallique (ici de l'or ou un alliage d'or) et les bras 13 sont formés par une deuxième poudre métallique (ici du cuivre, un alliage de cuivre, ou du laiton). Le premier motif est alors la serge 11 et le deuxième motif est alors les bras 13 et une étape de finition permet de révéler un motif ornemental mettant en œuvre l'aspect visuel et le contraste visuel entre les deux matériaux, que le balancier 12 soit à l'arrêt ou en mouvement. Les matériaux de la première poudre métallique et de la deuxième poudre métallique peuvent être choisis, en plus du choix mécanique en particulier eu égard à leur densité respective, pour des considérations esthétiques, par exemple de couleur. Ainsi, il est possible de choisir de l'or blanc pour une portion et de l'or rose pour l'autre portion.

La figure 4 représente une carrure selon un troisième mode de réalisation.

Dans le troisième mode de réalisation, le composant horloger est une carrure 1001. De préférence, la carrure 1001 est monolithique.

Une boîte de montre 1000 comprend la carrure 1001 et est fermée par une lunette et un fond non représentés, de manière conventionnelle.

La carrure 1001 comprend en outre au moins une corne 1002, ici quatre cornes 1002. Les cornes 1002 comprennent chacune un logement 1003 destiné à recevoir une extrémité de barrette, de sorte à fixer un bracelet de montre à la carrure 1001.

La carrure 1001 comprend en outre un logement de couronne 1004 afin de recevoir une tige de couronne 1009, représentée à la figure 5, et permettant par exemple le réglage de l'heure. La carrure 1001 comprend en outre deux filetages 1005 agencés pour recevoir des vis de fixations du protège-couronne 1006.

La carrure 1001 comprend une portion secondaire 1009, sous-jacente à une portion principale 1010 la recouvrant.

La portion principale 1010 est de préférence réalisée en acier et la portion secondaire 1009 est de préférence réalisée en bronze, cuivre ou alliage de cuivre.

La portion principale 1010 est réalisé avec une poudre principale métallique (ou première poudre métallique) formant un premier motif prédéterminé et la portion secondaire 1009 est réalisée avec une poudre secondaire métallique (ou deuxième poudre métallique) formant un deuxième motif prédéterminé. Le premier motif et le deuxième motif peuvent former un damassé, un treillis ou tout autre motif. Les poudres sont alors frittées. Il est possible de réaliser une série de couches ou de strates de la poudre principale et de la poudre secondaire. Une étape de finition permet de mettre en valeur l'habillage et de révéler le damassé ou le motif ornemental. Les strates de cuivre et d'acier peuvent avoir une épaisseur entre 0,05 mm et 1 mm, préférentiellement de 0.1 mm à 0.5 mm, encore plus préférentiellement de 0,15 mm à 0,3 mm. Le motif ornemental, le logo et/ou le texte sont ainsi directement, intrinsèquement, intégrés au composant, dans sa matière.

Le procédé de la présente invention permet de se distinguer, premièrement des matériaux composites réalisés par empilement de nappes de fibres et de matrice polymère ; et deuxièmement des métaux pour lesquels il est possible de faire un empilement de feuilles avec un frittage et un usinage ensuite ce qui est cependant compliqué, coûteux et dans lequel il y a des pertes de matière importantes. Il est aussi connu les procédés de fabrication de type damassé, de type « métal au grain de bois », (traduit du japonais Mokume-gane ou Mokume-game ce qui décrit l'apparence du métal qui ressemble au veinage naturel du bois,) ou par empilement de feuilles avec un travail de déformation à froid, mais le motif est difficile à contrôler et à réaliser.

Dans la présente invention, il est en outre possible de prévoir un logo ou une inscription sur la carrure 1001 comme expliqué en figures 1-2.

En outre, il est possible de prévoir de la même façon une matière sous-jacente pour le protège-couronne 1006 en tant que première portion, avec une deuxième portion la recouvrant, de sorte par exemple à mettre en valeur une inscription dans une zone prédéterminée 1006i du protège-couronne 1006. Par exemple, l'inscription peut être REG. pour une première zone prédéterminée et TM. pour une deuxième zone prédéterminée, signifiant une marque enregistrée.

La figure 5 représente un mouvement de montre 200 avec la masse oscillante 100, le balancier 12 et un pont selon un quatrième mode de réalisation.

Le mouvement de montre 200 est équipé de la masse oscillante 100 telle que présentée ci-avant, en lien avec les figures 1 et 2.

Le mouvement de montre 200 est équipé du système oscillant 1, avec le balancier 12 et le spiral 10, dans une variante vis-à-vis de la description ci-avant en lien avec la figure 3.

Le mouvement de montre 200 est destiné à être encagé dans un encageage de la carrure 1001, tels que présentés ci-avant, en lien avec la figure 4.

Les numéros de référence sont repris autant que nécessaire pour les parties communes, et d'une manière générale, sur toutes les figures.

Le pont, par exemple le pont de balancier 6, est fixé sur la platine 202 du mouvement 200 à l'aide de vis de fixation 7, au niveau d'une portion d'attache du pont de balancier 6. Le pont de balancier 6 comprend une portion de pivotement agencée pour recevoir un rubis 9 d'un système antichoc par exemple. Le rubis 9 est agencé pour recevoir une extrémité d'arbre de balancier 8 fixé au balancier 12. Le rubis 9 est également appelé pierre d'horlogerie. Il est possible de prévoir sur le pont de balancier 6 une zone prédéterminée 6b, sous-jacente. Ainsi, le pont de balancier 6 peut comprendre une couche externe réalisée avec une poudre métallique principale frittée et une couche interne, sous-jacente, recouverte par la couche externe, réalisée avec une poudre secondaire métallique. Il est possible de prévoir la poudre principale métallique en laiton ou en acier et la poudre secondaire métallique en or et de révéler le motif ornemental par enlèvement de matière de la couche externe. Le motif ornemental peut être une décoration, un logo ou une inscription par exemple.

Le mouvement 200 peut comprendre un autre pont 201 afin de permettre la fixation et le pivotement d'autres composants du mouvement 200, et ainsi faire office de pont barillet, de pont de roue de centre, de pont de renvoi, voire de pont dit pont 3/4 platine (recouvrant typiquement les 3/4 de la platine 202).

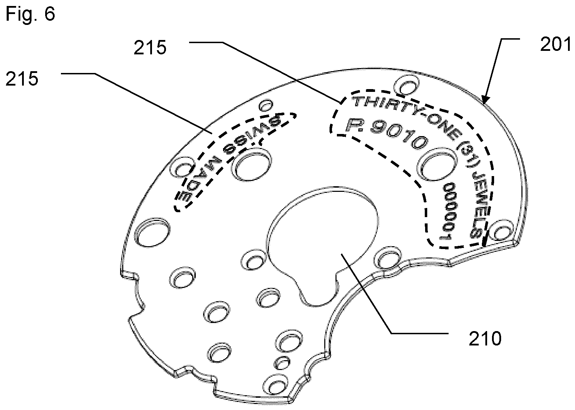

La figure 6 représente le pont en vue en perspective.

La figure 6 représente le pont (ici l'autre pont 201) en vue en perspective. L'autre pont 201 comprend au moins une zone prédéterminée 215 dans laquelle est déposée la poudre secondaire métallique qui peut être révélée par enlèvement de matière de la couche externe afin de révéler le motif ornemental. Le motif est ici une inscription, comme une inscription légale.

En outre, l'autre pont 201 peut comprendre un logement recevant un système de transmission 150 permettant le transfert de l'énergie mécanique de la masse oscillante 100 au ressort-moteur du mouvement 200.

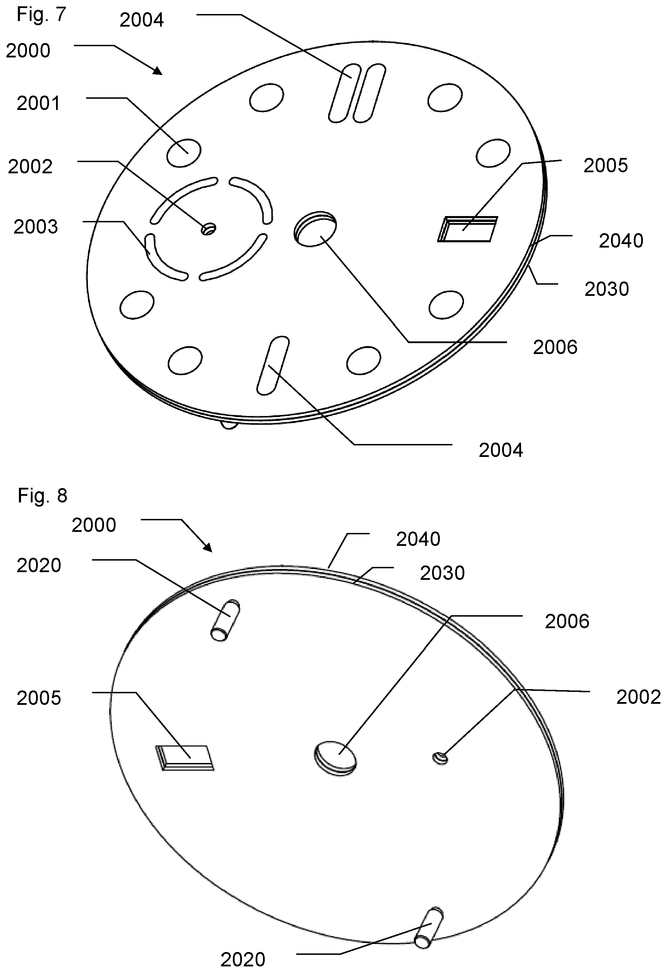

La figure 7 représente un cadran selon un cinquième mode de réalisation, vu en perspective.

Le cadran 2000, ou cadran de montre, comprend une couche inférieure ou couche interne 2030, et une couche supérieure ou couche externe 2040. La couche supérieure 2040 recouvre la couche inférieure 2030 sauf, premièrement au niveau d'évidements simples dans la couche supérieure 2040, et deuxièmement au niveau d'évidements doubles dans la couche supérieure 2040 et la couche inférieure 2030. Ces évidements simples sont par exemple des heures index, ou simplement index ou indices 2004 à 6 heures et à 12 heures, d'autres index 2001 aux autres heures, les arcs de cercles 2003 aidant la lecture de la course d'une aiguille dite de petite seconde, ou de réserve de marche par exemple. Les évidements simples permettent de rendre visible la couche inférieure 2030. Les évidements doubles permettent de coopérer avec les organes positionnés sous la couche inférieure 2030. Les évidements doubles peuvent être par exemple un guichet 2005, un trou central 2006 ou un trou excentré 2002. Ces organes peuvent traverser les évidements doubles. Il peut s'agir d'un axe pour une aiguille de petite seconde, un indicateur de réserve de marche, ou les aiguilles de l'heure ou de minute. Ces organes peuvent ne pas traverser la couche inférieure 2030, comme par exemple un indicateur de date et jour de la semaine, mais être simplement positionnés sous elle.

Il est possible de prévoir ainsi une impression bi-matière du cadran 2000 avec sa couche supérieure 2040 et sa couche inférieure 2030 et d'enlever de la matière à la couche supérieure 2040 afin de rendre visible la couche inférieure 2030. Il est alors possible de prévoir un cadran pour plusieurs modèles de montre et de procéder à l'enlèvement de matière à la demande, pour un tel ou tel autre cadran.

La couche supérieure 2040, ou couche externe, est formée dans une première poudre métallique frittée et la couche inférieure 2030, ou couche interne, est formée dans une deuxième poudre métallique frittée, contenant de préférence des terres rares luminescentes.

Alternativement, il est possible de prévoir un usinage de la couche supérieure 2040 et de déposer la poudre métallique de la couche inférieure 2030 dans les creux de la couche supérieure 2040, puis réaliser le frittage de la poudre métallique de la couche inférieure 2030.

La figure 8 représente le cadran vu en perspective, du côté opposé à celui de la figure précédente.

Les chiffres de références sont repris autant que nécessaire et possible.

Le cadran 2000 comprend en outre deux pieds 2020 permettant la fixation au mouvement de montre.

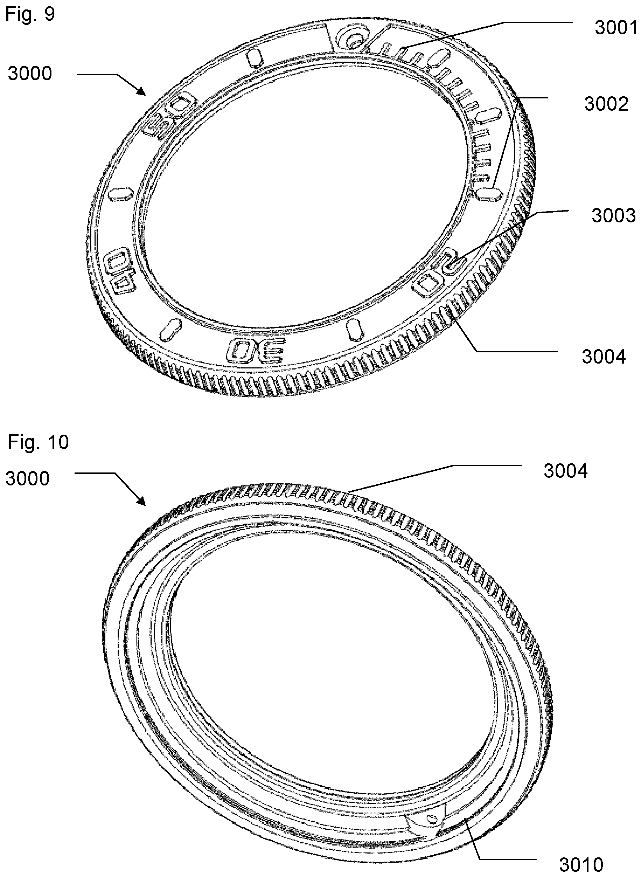

La figure 9 représente une lunette selon un sixième mode de réalisation, vue en perspective.

La lunette 3000 comprend des index chronométriques 3001, 3002 et des chiffres 3003 permettant la lecture de l'heure, minute et seconde.

La lunette 3000 comprend en outre des cannelures, crénelures ou dents 3004 afin de faciliter la préhension de la lunette par l'utilisateur, par exemple pour le cas d'une lunette tournante.

Comme indiqué précédemment, la lunette 3000 peut comprendre une couche interne formée d'une poudre métallique frittée et une couche externe formée d'une autre poudre métallique frittée. Par enlèvement de matière, il est possible de rendre visible la poudre métallique frittée de la couche interne et ainsi de révéler les index chronométriques 3001, 3002 et les chiffres 3003. Ceci permet de prévoir un modèle standard de lunette avant l'étape de finition par enlèvement de matière et d'afficher plusieurs styles d'index ou de chiffres. En prévoyant la poudre métallique frittée de la couche interne d'une couleur différente de la poudre métallique frittée de la couche externe, il est possible d'améliorer l'esthétisme tout en facilitant la fabrication.

Il est en outre possible de prévoir plusieurs couches internes de plusieurs couleurs pour permettre d'afficher plusieurs couleurs avec plusieurs hauteurs d'enlèvement de matière, ou de prévoir par exemple une indication d'usure des index (une patine par exemple).

Il est possible de prévoir une poudre métallique différente pour les cannelures 3004.

La figure 10 représente la lunette vue en perspective, du côté opposé à celui de la figure précédente.

La lunette 3000 comprend une piste 3010 afin de coopérer avec la carrure 1001, notamment s'agissant des lunettes tournantes.

On comprendra que diverses modifications et/ou améliorations évidentes pour l'homme du métier peuvent être apportées aux différents modes de réalisation de l'invention décrits dans la présente description.

En particulier, il est fait référence à la possibilité d'avoir d'autres fonctions pour les ponts, ou de changer le nombre de rubis et de rouages du mouvement. Il est possible d'appliquer le procédé de fabrication à d'autres composants horlogers, comme le porte-piton par exemple.

S'agissant de la masse oscillante 100, il est tout à fait possible de prévoir la branche centrale 131 décalée sur le côté, avec ou sans la présence des branches auxiliaires 130, de telle sorte que la branche centrale 131 est tout simplement un bras de la masse oscillante 100.

En outre, il est possible d'utiliser d'autres matières que celles listées, la liste n'étant pas exhaustive. En particulier, il est fait référence au tantale, à l'hafnium, à l'irridium et leurs alliages, ou au bronze d'aluminium, sans y être limité.

Il est possible de combiner les modes de réalisations autant que possible ou nécessaire.

## Revendications

1. Procédé de fabrication d'un composant horloger ou joaillier (12, 100, 201, 1001, 2000, 3000) comprenant les étapes suivantes :

    - déposer une première poudre métallique en formant un premier motif prédéterminé, et une deuxième poudre métallique, différente de la première poudre métallique, en formant un deuxième motif prédéterminé, le dépôt de la deuxième poudre métallique se faisant de manière séquentielle ou simultanée au dépôt de la première poudre

**11**

métallique,
- réaliser une opération de frittage, de sorte à fritter les premières et deuxièmes poudres,
- réaliser une étape d'usinage et/ou de finition pour obtenir le composant horloger ou joaillier (12, 100, 201, 1001, 2000, 3000) comprenant un motif ornemental formé d'au moins une partie du premier motif et/ou d'au moins une partie du deuxième motif,

**caractérisé en ce que** l'étape d'usinage et/ou de finition consiste à réaliser une attaque chimique sur la première poudre métallique frittée et/ou sur la deuxième poudre métallique frittée.

2. Procédé de fabrication selon la revendication précédente, dans lequel la première poudre métallique et la deuxième poudre métallique sont frittées simultanément.

3. Procédé de fabrication selon l'une des revendications précédentes, dans lequel le deuxième motif est un logo (140) et/ou un texte (141).

4. Procédé de fabrication selon l'une des revendications précédentes, dans lequel la première poudre métallique présente une couleur différente de la deuxième poudre métallique.

5. Procédé de fabrication selon l'une des revendications précédentes, dans lequel la première poudre métallique comprend du bronze et la deuxième poudre comprend du titane, ou
dans lequel la première poudre métallique comprend de l'or gris et la deuxième poudre comprend de l'or rouge.

6. Procédé de fabrication selon l'une des revendications précédentes, dans lequel l'étape d'usinage et/ou de finition consiste à enlever un masque formé par la première poudre métallique et/ou la deuxième poudre métallique.

7. Procédé de fabrication selon l'une des revendications précédentes, comprenant en outre l'étape préliminaire :

- mélanger la première poudre et/ou la deuxième poudre avec un liant.

8. Procédé de fabrication selon l'une des revendications précédentes, comprenant en outre l'étape suivante :

- enlever un liant du composant horloger ou joaillier.

9. Procédé de fabrication selon l'une des revendications précédentes, comprenant les étapes suivantes:

- former au moins une couche interne (2030) par une opération de frittage de la deuxième poudre métallique, et
- former au moins une couche externe (2040), recouvrant la couche interne (2030), par une opération de frittage de la première poudre métallique, et
- dévoiler au moins une partie de la couche interne (2030) par une opération de finition telle qu'un enlèvement localisé de matière de la couche externe (2040).

10. Procédé de fabrication selon la revendication précédente, dans lequel la couche interne (2030) est formée dans une zone prédéterminée (12b, 140b, 141b) du composant horloger ou joaillier (12, 100, 201, 1001, 2000, 3000).

11. Procédé de fabrication selon l'une des revendications précédentes, dans lequel le dépôt de la première poudre métallique et/ou de la deuxième poudre métallique est commandé par une unité de commande.

12. Composant horloger monolithique (12, 100, 201, 1001, 2000, 3000) comprenant :

- une première portion formée d'une première poudre métallique frittée de couleur CIE LAB L1*a1*b1*,
- une deuxième portion formée d'une deuxième poudre métallique frittée de couleur CIE LAB L2*a2*b2*, formant un motif graphique en contraste avec la première poudre métallique frittée,

dans lequel la deuxième poudre métallique frittée a une couleur différente de la première poudre métallique frittée telle

$$\Delta E_{ab}^* = \sqrt{(L_2^* - L_1^*)^2 + (a_2^* - a_1^*)^2 + (b_2^* - b_1^*)^2}$$

que $\Delta E^*_{ab} > 3$ de préférence $\Delta E^*_{ab} > 6$ avec                                                                                          .

13. Composant horloger monolithique selon la revendication précédente, dans lequel le motif graphique est dévoilé par enlèvement de matière de la première portion.

Fig. 1

100

130

110

130

132

132

122

121

131

140b

120

140

141

133

141b

Fig. 2

100

110

111

112

121

130

130

124

123

132

132

131

120

Fig. 3

Fig. 4

Fig. 5

Fig. 6

215

215

201

210

Fig. 7

2004

2000

2001

2002

2003

2005

2040

2030

2006

2004

Fig. 8

2000

2040

2030

2006

2020

2005

2002

2020

Fig. 9

3000

3001

3002

3003

3004

Fig. 10

3000

3004

3010